(19) Europäisches Patentamt
European Patent Office
Office européen des brevets

(11) Publication number: **0 341 318**
**A1**

(12) # EUROPEAN PATENT APPLICATION
published in accordance with Art. 158(3) EPC

(21) Application number: **88909825.7**

(22) Date of filing: **11.11.88**

Data of the international application taken as a basis:

(86) International application number:
**PCT/JP88/01139**

(87) International publication number:
**WO89/04319 (18.05.89 89/11)**

(51) Int. Cl.³: **C 07 F 15/00**
C 07 C 87/34, A 61 K 31/28

(30) Priority: **11.11.87 JP 284967/87**

(43) Date of publication of application:
**15.11.89 Bulletin 89/46**

(84) Designated Contracting States:
**AT BE CH DE FR GB IT LI LU NL SE**

(71) Applicant: **TORAY INDUSTRIES, INC.**
**2-1, Nihonbashi Muromachi 2-chome Chuo-ku**
**Tokyo 103(JP)**

(72) Inventor: **MUTOH, Masato**
**20-1, Kamakurayama 3-chome**
**Kamakura-shi Kanagawa-ken 248(JP)**

(72) Inventor: **MATSUNAGA, Keiichi**
**6-10, Aza-Arata Daiwa-cho**
**Okazaki-shi Aichi-ken 444(JP)**

(72) Inventor: **IMAMURA, Shinzo**
**2-1, Toray Matsuzono Shataku 2-19, Matsuzono-cho**
**Mizuho-ku Nagoya-shi Aichi-ken 467(JP)**

(72) Inventor: **SUGAWARA, Yoshinori**
**13-1, Sonoyama 2-chome Otsu-shi**
**Shiga-ken 520(JP)**

(72) Inventor: **KAWAI, Hideki**
**20-1, Kamakurayama 3-chome Kamakura-shi**
**Kanagawa-ken 248(JP)**

(74) Representative: **Kador & Partner**
**Corneliusstrasse 15**
**D-8000 München 5(DE)**

(54) **NOVEL PLATINUM (II) COMPLEX, PROCESS FOR PREPARING THE SAME, AND THERAPEUTIC AGENT FOR MALIGNANT TUMOR.**

(57) A novel platinum (II) complex represented by general formula (I), wherein A is an enol form of a β-diketone represented by general formula (II), wherein $R_1$ is an alkyl group having 1 to 4 carbon atoms or a perfluoroalkyl group having 1 to 4 carbon atoms, $R_2$ is a substituted or unsubstituted alkyl group having 1 to 4 carbon atoms, and $R_3$ is hydrogen or an alkyl group having 1 to 3 carbon atoms, provided that $R_2$ and $R_3$ may be each combined to a carbon atom bonded thereto to form a ring: and the configuration of 1,2-diaminocyclohexane is cis, trans-1 or trans-d. The novel platinum (II) complex has a strong antitumor activity and is less toxic, which renders the platinum (II) complex useful as a therapeutic agent for malignant tumor.

EP 0 341 318 A1

./...

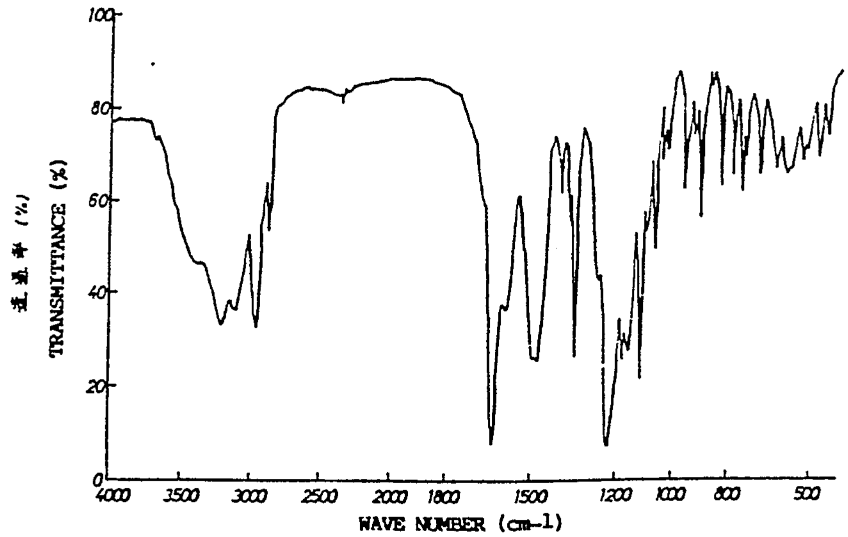


(KBr METHOD)

波 数 (cm-1)
(KBr 法)

# NOVEL PLATINUM(II) COMPLEXES, PROCESS FOR THEIR PREPARATION, AND PHARMACEUTICAL AGENT FOR TREATING MALIGNANT TUMOR

The present invention relates to novel platinum(II) complexes, a process for their preparation, and a pharmaceutical agent for treating a malignant tumor containing said complex as an active ingredient.

## Background of the Invention:

A significant progress has recently been developed in a field of chemotherapy for malignant tumors by administering cis-diamminedichloroplatinum(II), hereinafter referred to as CDDP. This progress is due to the remarkable remedial efficacy of CDDP against cancers of genital organs such as an ovarian cancer and testicular cancer which are difficult to remedy with conventional chemotherapeutic agents. CDDP, however, causes serious adverse reactions such as nephro- and myelotoxicities which provide a serious problem in its clinical use.

On the other hand, extensive studies have been made to improve, especially, nephrotoxicity, which is a dose limiting factor (DLF), and have resulted in a development of new platinum complexes of the second generation, for instance, cis-diammine-1,1-cyclobutanedicarboxylate platinum(II), hereinafter abbreviated as CBDCA, cis-diammine-O,O'-glycolate platinum(II), etc. (Japanese Patent Application Laid-Open (Kokai) No. 56-154493, etc.).

Summary of the Invention:

These prior compounds certainly show a weak nephrotoxicity, but are not so high in an antitumor activity as CDDP. Therefore, it has been still desired to develop a platinum complex having a potent antitumor activity and as well as a weak toxicity.

The objects of the present invention are to provide novel platinum(II) complexes satisfying both requirements of the potent antitumor activity and the weak toxicity, and further to provide a pharmaceutical agent for treating a malignant tumor that meets said two requirements.

The above objects can be accomplished by the present invention as described hereinafter.

The present invention provides novel platinum(II) complexes represented by the general formula (I):

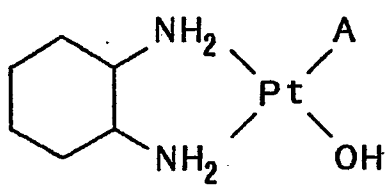

( I )

wherein A is an enol form of ß-diketone of the formula(II):

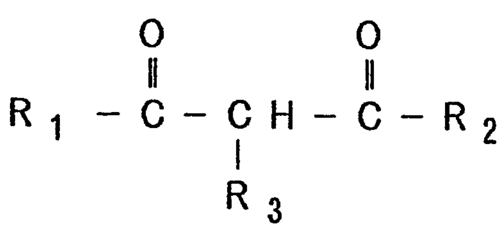

( II )

in which $R_1$ is an alkyl group having 1 to 4 carbon atoms or a perfluoroalkyl group having 1 to 4 carbon atoms; $R_2$ is a

substituted or unsubstituted alkyl group having 1 to 4 carbon atoms; and $R_3$ is hydrogen or an alkyl group having 1 to 3 carbon atoms, or $R_2$ and $R_3$ together with carbon atoms to which they are attached may form a ring, and the configuration of 1,2-diaminocyclohexane is cis-, trans-ℓ- or trans-$d$-, and a pharmaceutical agent for treating a malignant tumor containing said complex (I) as an active ingredient.

In the above formula (I), the enol form of ß-diketone of the ligand A which coordinates to the platinum atom is composed of a conjugate system represented by the following formula:

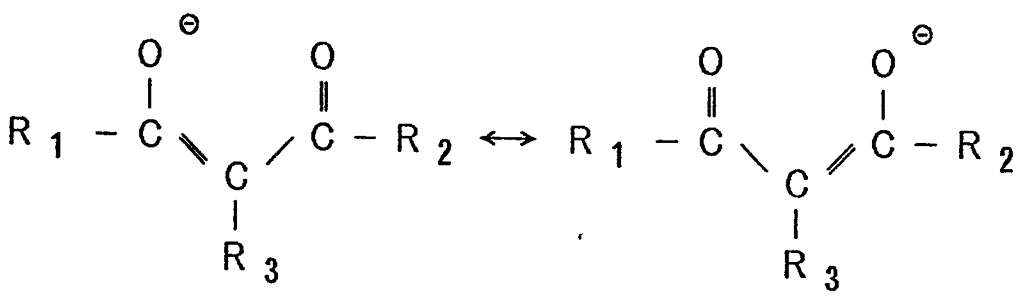

This conjugate system is hereinafter depicted as the following formula (III):

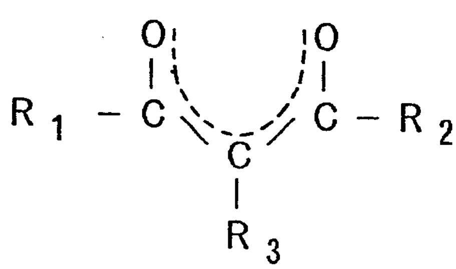

(III)

The novel compounds of the present invention possess the potent antitumor activity as well as the weak toxicity, and accordingly are effective as the pharmaceutical agent for

treating the malignant tumor.

Brief Description of Drawings:

Fig. 1 shows an infrared absorption spectrum of compound No. 1 of this invention described in Example 1.

Fig. 2 shows an infrared absorption spectrum of compound No. 2 of this invention described in Example 2.

Fig. 3 shows an infrared absorption spectrum of compound No. 5 of this invention described in Example 5.

Detailed Description of the Invention:

Specific compounds of the present invention represented by the general formula (I) are listed below:

1) 2,2-Dimethyl-6,6,7,7,8,8,8-heptafluoro-3,5-octanedione-hydroxo(trans-*l*-1,2-diaminocyclohexane)platinum(II) (compound No. 1)

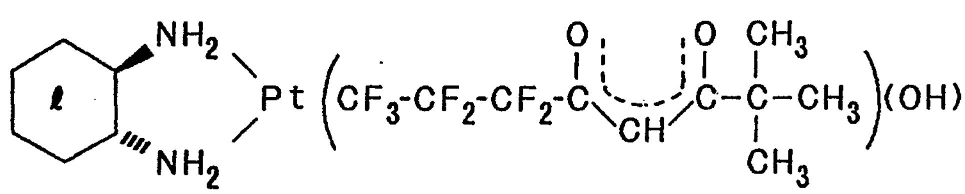

2) 2,2-Dimethyl-6,6,7,7,8,8,8-heptafluoro-3,5-octanedione-hydroxo(trans-*d*-1,2-diaminocyclohexane)platinum(II) (compound No. 2)

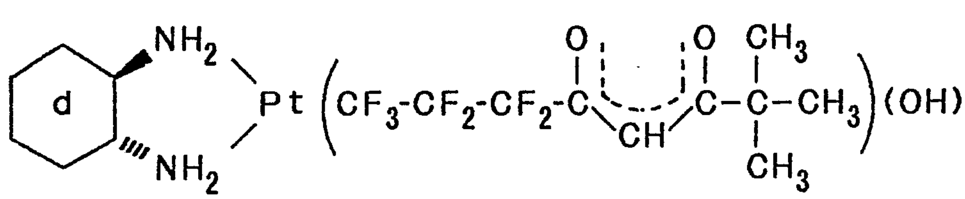

3) 6,6,7,7,8,8,8-Heptafluoro-3,5-dioxooctanoic acid hydroxo-(trans-ℓ-1,2-diaminocyclohexane)platinum(II) (compound No.3)

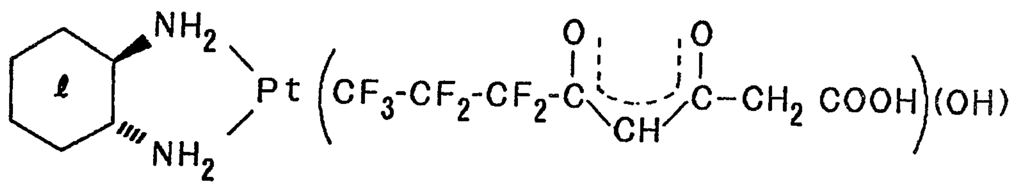

4) 2-(2-(2-Methoxyethoxy)ethoxy)ethyl 2,2-dimethyl-6,6,7,7,8,8,8-heptafluoro-3,5-dioxooctanoate-hydroxo(trans-ℓ-1,2-diamino-cyclohexane)platinum(II) (compound No. 4)

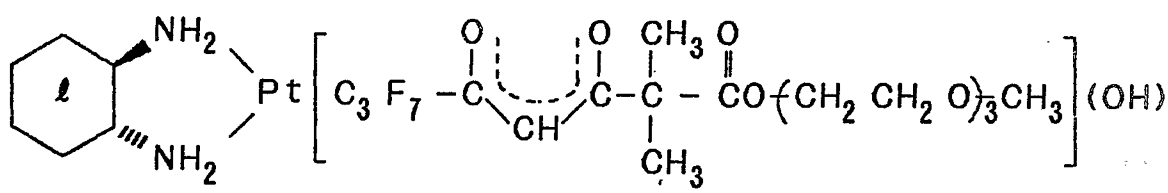

5) 3-Heptafluorobutyryl-D-camphor-hydroxo(trans-ℓ-1,2-diamino-cyclohexane)platinum(II) (compound No.5)

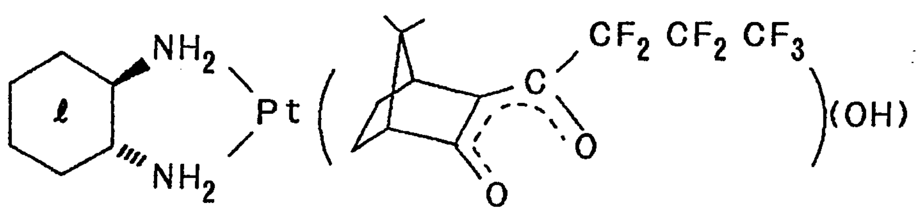

The compounds of this invention (formula I) may be synthesized according to the reaction scheme shown below:

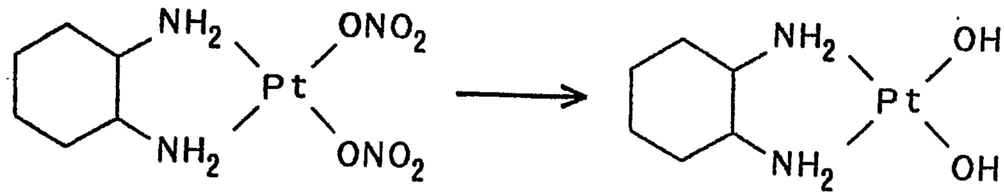

(Formula IV) (Formula V)

(Formula V) +

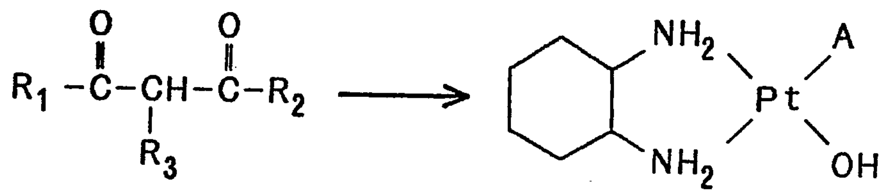

(Formula II) (Formula I)

That is, an aqueous solution of dinitrato(1,2-diaminocyclohexane)platinum(II) (formula IV) is passed through a column packed with an anion exchange resin (OH type) such as Amberlite IRA-400 or Diaion SA-10A to obtain dihydroxo-(1,2-diaminocyclohexane)platinum(II) (formula V), and the resulting compound is then reacted with ß-diketone (formula II). The reaction is usually carried out by mixing an alcohol solution of the compound of formula II with an aqueous solution of a compound of formula V at an ambient temperature. The end compound (formula I) obtained from the reaction in the aqueous solution may occasionally contain water in a form of aquocomplex, and such aquocomplex is also embraced within the scope of the compounds of the invention.

Dinitrato(1,2-diaminocyclohexane)platinum(II) (formula IV), which is a starting material of the compounds of this invention, may be synthesized according to the following scheme:

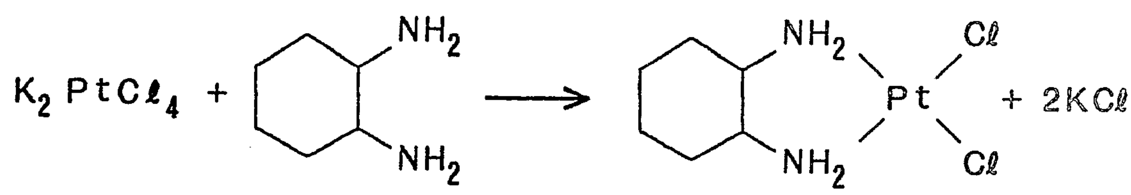

(Formula VI)

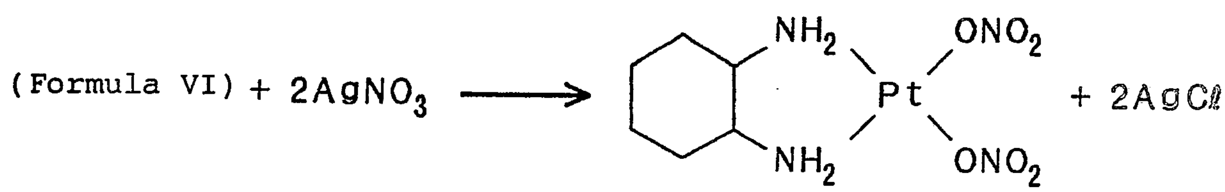


(Formula IV)

The compound of formula (IV) obtained according to the above reaction scheme includes, depending on the configuration of 1,2-diaminocyclohexane (hereinafter abbreviated as "dach") used as a starting reagent, three types of isomers, i.e., $Pt(trans\text{-}\ell\text{-}1,2\text{-}dach)(ONO_2)_2$, $Pt(trans\text{-}d\text{-}1,2\text{-}dach)(ONO_2)_2$, and $Pt(cis\text{-}1,2\text{-}dach)(ONO_2)_2$.

A pharmaceutical agent containing an therapeutically effective amount of the compound of the present invention may be administered either orally or parenterally in its clinical use. The pharmaceutical agent may be formulated in various forms such as tablet, sugar-coated tablet, pill, capsule, powder, troche, liquid, suppository and injectable liquid. These formulations may be prepared in an admixture with a

pharmaceutically acceptable excipient. Examples of such excipient include lactose, sucrose, glucose, sorbitol, mannitol, potato starch, amylopectin, various other types of starch, cellulose derivatives (such as carboxymethyl cellulose and hydroxyethyl cellulose), gelatin, magnesium stearate, polyvinyl alcohol, calcium stearate, polyethylene glycol wax, gum arabic, talc, titanium dioxide, vegetable oils such as olive oil, peanut oil and sesame oil, parafin oil, neutral fatty bases, ethanol, propylene glycol, physiological saline, sterile water, glycerol, coloring matter, seasoning, densifying agent, stabilizer, isotonizing agent, buffering agent, and other pharmaceutically acceptable excipients.

The pharmaceutical agent of this invention may contain the compound according to the invention in an amount of 0.001 to 85% by weight, preferably 0.005 to 60% by weight.

The dose of therapeutic agent of the invention, though variable mainly depending on the symptom, is 0.005 to 200 mg, preferably, 0.01 to 50 mg per body weight per day for adult.

Examples:

The present invention will be further illustrated in detail by referring to the examples hereinafter described.

Example 1

An aqueous solution of Pt(trans-$\ell$-dach)$(ONO_2)_2$ was passed through a column packed with an anion exchange resin Diaion SA-10A (OH type). To 100 ml (4.2 mmmol) of an aqueous

solution of the obtained Pt(trans-ℓ-dach)$(OH)_2$ was added 50 ml of ethanol, followed by further addition of a solution of 1.24 g (4.2 mmol) of 2,2-dimethyl-6,6,7,7,8,8,8-heptafluoro-3,5-octanedione in 200 ml of ethanol, and the mixture was stirred at room temperature for 20 hours. After filtering off a small amount of the precipitated crystals, the filtrate was concentrated upto 100 g, whereupon viscous crystals separated out. This concentrated solution was diluted with 45 ml of ethanol, heated to 55-60°C, stirred, cooled and filtered to collect 1.20 g of crystals. These crystals were dissolved in 6 ml of methanol followed by addition of 1 g of water. The whole was then cooled to accelerate the precipitation. The precipitate was collected by filtration and dried under reduced pressure to obtain 0.71 g of 2,2-dimethyl-6,6,7,7,8,8,8-heptafluoro-3,5-octanedione-hydroxo(trans-ℓ-1,2-diaminocyclohexane)platinum(II) (compound No. 1), 27% yield.

An infrared absorption spectrum of this complex is shown in Figure 1, and the melting point and elemental analysis of the complex are tabulated below. The amount of Pt was determined by atomic-absorption spectroscopy.

Melting point: $>$290°C

Elemental analysis (%): $C_{16}H_{25}F_7N_2O_3Pt$

| | C | H | N | Pt |
|---|---|---|---|---|
| Calculated | 30.92 | 4.05 | 4.51 | 31.39 |
| Found | 29.9 | 3.9 | 4.5 | 31.0 |

Example 2

An aqueous solution of Pt(trans-*d*-dach)$(ONO_2)_2$ was ion-exchanged in line with the procedure of Example 1 to obtain an aqueous solution of the Pt(trans-*d*—dach)$(OH)_2$. To 50 ml (4.2 mmol) of the aqueous solution thus obtained was added 50 ml of ethanol followed by further addition of a solution of 1.24 g (4.2 mmol) of 2,2-dimethyl-6,6,7,7,8,8,8-heptafluoro-3,5-octanedione in 100 ml of ethanol, and the mixture was stirred at room temperature for 20 hours. After filtering off precipitated crystals, the filtrate was concentrated upto 57 g. The solution was then diluted with 40 ml of ethanol, heated to 55-60°C and stirred for about 1 hour. After cooling, the precipitated crystals were collected by filtration, washed with water and dried under reduced pressure to obtain 1.27 g of 2,2-dimethyl-6,6,7,7,8,8,8-heptafluoro-3,5-octanedione-hydroxo(trans-*d*-1,2-diaminocyclohexane)-platinum(II) (compound No. 2), 49% yield.

An infrared absorption spectrum of this complex is shown in Figure 2, and the melting point and elemental analysis of the complex are tabulated below. The amount of Pt was determined by atomic-absorption spectroscopy.

Melting point: >300°C

Elemental analysis (%): $C_{16}H_{25}F_7N_2O_3Pt$

| | C | H | N | Pt |
|---|---|---|---|---|
| Calculated | 30.92 | 4.05 | 4.51 | 31.39 |
| Found | 30.4 | 3.8 | 4.6 | 30.5 |

Example 3

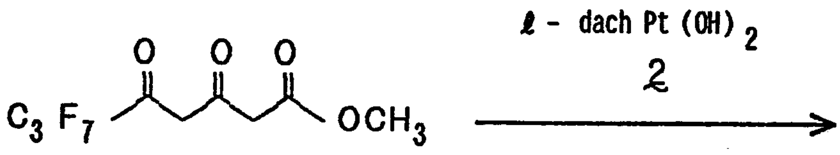


Compound No. 3

1

Into 25 ml of tetrahydrofuran was dissolved 728 mg (2.33 mmol) of heptafluoro compound 1. Then, 26 ml of an aqueous solution containing a dihydroxy platinum complex 2 (1.75 mmol) was added dropwise thereto under ice cooling, and the mixture was stirred overnight at room temperature. The mixed solution was concentrated to dryness, and the residue was washed twice with 10 ml of ethyl acetate and 5 ml of cold water successively.

The crude product was reprecipitated with a mixture of methanol/ethyl acetate to obtain 720 mg of a pale-yellow solid platinum complex (compound No. 3), 58% yield.

The melting point, elemental analysis (the data of Pt was determined by atomic-absorption spectroscopy), and IR absorption and NMR spectra of the complex are shown below.

Melting point: 240 - 252°C (decomposed)

Elemental analysis (%): $C_{14}H_{19}F_7N_2O_5Pt$

| | C | H | N | Pt |
|---|---|---|---|---|
| Calculated | 26.97 | 3.07 | 4.49 | 31.29 |
| Found | 27.1 | 3.1 | 4.5 | 31.5 |

IR (KBr disc) $cm^{-1}$: 3230, 3040, 1728, 1680, 1585, 1220

$^1$H-NMR (400 MHz, $CD_3OD$) ppm:

1.23 (2H, m), 1.35 (2H, m), 1.62 (2H, m), 2.04 (2H, m) 2.44 (2H, m), 3.30 (m), 6.23 (1H, s)

Example 4

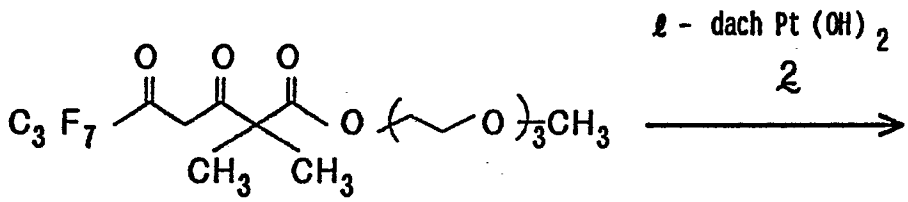


Compound No. 4

3

Into 30 ml of tetrahydrofuran was dissolved 1.0 g (2.1 mmol) of heptafluoro compound 3. Then, 32 ml of an aqueous solution containing a dihydroxy platinum complex 2 (2.1 mmol) was added dropwise thereto under ice cooling, and the mixture was stirred overnight at room temperature. The mixed solution was concentrated to dryness, and the residue was washed twice with 15 ml of ethyl acetate and 5 ml of cold water successively.

The crude product was reprecipitated with a mixture of methanol/ethyl acetate to obtain 1.0 g of a pale-yellow solid platinum complex (compound No. 4).

Example 5

A solution of 0.70 g (2.0 mmol) of 3-heptafluorobutyryl-D-camphor in 50 ml of ethanol was added to a mixture of 25 ml

of an aqueous solution of Pt(trans-ℓ-dach)$(OH)_2$ (2.1 mmol) and 25 ml of ethanol, and the mixed solution was stirred at room temperature for 20 hours. After filtering off a trace of solid precipitate, the filtrate was concentrated upto 37.5 g. The resulting crystals were collected by filtration and dried to give 0.83 g of 3-heptafluorobutyryl-D-camphor-hydroxo-(trans-ℓ-1,2-diaminocyclohexane)platinum (compound No. 5), 63% yield.

An IR absorption spectrum of this complex is shown in Figure 3, and the melting point and elemental analysis of the complex are shown below. The amount of Pt was determined by atomic-absorption spectroscopy.

Melting point: >300°C

Elemental analysis (%): $C_{19}H_{27}F_7N_2O_3Pt$

| | C | H | N | Pt |
|---|---|---|---|---|
| Calculated | 34.60 | 4.13 | 4.25 | 29.58 |
| Found | 35.7 | 4.2 | 4.1 | 29.5 |

Example 6

In this example, the antitumor activity of compound No. 1 is evaluated in comparison with those of known CDDP and CBDCA.

L1210 murine leukemia cells which were subcultured in DBA/2 mouse were inoculated intraperitoneally into $CDF_1$ mice at $10^5$ cells/mouse. Each experimental group was composed of 6-10 mice (male, 6-weeks old). Each test compound was administered three times, i.e., on the 1st, 5th and 9th days

after tumor inoculation. CBDCA and CDDP were used as control drugs in this experiment. Each compound was dissolved or suspended in 0.05% Tween 80 solution and administered in mice. Antitumor activity against L1210 leukemia was determined by T/C value calculated by the following equation and by the number of 30 days survival mice.

$$T/C\ (\%) = \frac{\text{mean survival days of treated mice}}{\text{mean survival days of control mice}} \times 100$$

The results are shown in Table 1.

Table 1

Antitumor activity of platinum complexes against L1210 murine leukemia in mice

| Compound | Dose (mg/kg) | Survival days (mean±SD) | T/C (%) | Survival rate |
|---|---|---|---|---|
| Control | - | 8.1±0.3 | 100 | 0/10 |
| Compound No. 1 | 1 | 10.5±1.2 | 130 | 0/6 |
| | 10 | 29.5±1.2 | 364 | 4/6 |
| | 25 | 29.7±0.5 | 367 | 4/6 |
| | 50 | 24.0±10.3 | 296 | 4/6 |
| | 100 | 5.2±1.9 | 64 | 0/6 |
| | 200 | 1.7±0.5 | 21 | 0/6 |
| CDDP | 2.5 | 14.7±2.7 | 181 | 0/6 |
| | 5.0 | 18.8±4.3 | 232 | 0/6 |
| | 7.5 | 18.7±3.1 | 231 | 0/6 |
| Control | - | 8.5±0.5 | - | 0/10 |
| CBDCA | 1 | 8.3±0.5 | 98 | 0/10 |
| | 10 | 9.3±0.5 | 109 | 0/10 |
| | 25 | 10.1±1.3 | 119 | 0/10 |
| | 50 | 13.1±2.3 | 156 | 0/10 |
| | 100 | 14.1±3.7 | 166 | 0/10 |
| | 200 | 9.6±0.7 | 113 | 0/10 |

As apparent from the results shown in Table 1, the compound No. 1 of the invention has the T/C value greater than 360% in groups of 10 mg/Kg and 25 mg/Kg dose, and the rate of survival mice on the 30th day after tumor inoculation was 4/6. These results indicate that the antitumor activity of the compound No. 1 is higher than CDDP and CBDCA.

Example 7

The antitumor activities of the compounds Nos. 3 to 5 of this invention were determined in the same way as in Example 6.

The results are shown in the following Tables 2 to 4.

Table 2

Antitumor activity of platinum complexes against L1210 murine leukemia in mice

| Compound | Dose (mg/kg) | Survival days (mean±SD) | T/C (%) | Survival rate |
|---|---|---|---|---|
| Control | - | 8.4±0.8 | 100 | 0/10 |
| Compound No. 3 | 1 | 9.7±1.4 | 115 | 0/6 |
| | 10 | 9.7±1.4 | 115 | 0/6 |
| | 25 | 11.0±0.9 | 131 | 0/6 |
| | 50 | 11.8±0.8 | 140 | 0/6 |
| | 100 | 14.0±2.7 | 167 | 0/6 |
| | 200 | 11.2±3.7 | 133 | 0/6 |
| CDDP | 2.5 | 12.0±3.0 | 143 | 0/6 |
| | 5.0 | 14.3±2.9 | 170 | 0/6 |
| | 7.5 | 15.5±2.1 | 185 | 0/6 |
| Control | - | 8.5±0.5 | - | 0/10 |
| CBDCA | 1 | 8.3±0.5 | 98 | 0/10 |
| | 10 | 9.3±0.5 | 109 | 0/10 |
| | 25 | 10.1±1.3 | 119 | 0/10 |
| | 50 | 13.1±2.3 | 156 | 0/10 |
| | 100 | 14.1±3.7 | 166 | 0/10 |
| | 200 | 9.6±0.7 | 113 | 0/10 |

Table 3

Antitumor activity of platinum complexes against L1210 murine leukemia in mice

| Compound | Dose (mg/kg) | Survival days (mean±SD) | T/C (%) | Survival rate |
|---|---|---|---|---|
| Control | - | 8.4±0.8 | 100 | 0/10 |
| Compound No. 4 | 1 | 10.7±2.7 | 127 | 0/6 |
| | 10 | 20.8±7.8 | 248 | 2/6 |
| | 25 | 23.7±5.9 | 282 | 2/6 |
| | 50 | 11.5±9.5 | 137 | 1/6 |
| | 100 | 2.0±0.0 | 24 | 0/6 |
| | 200 | 2.0±0.0 | 24 | 0/6 |
| CDDP | 2.5 | 12.0±3.0 | 143 | 0/6 |
| | 5.0 | 13.7±1.5 | 163 | 0/6 |
| | 7.5 | 15.5±2.1 | 185 | 0/6 |
| Control | - | 8.5±0.5 | - | 0/10 |
| CBDCA | 1 | 8.3±0.5 | 98 | 0/10 |
| | 10 | 9.3±0.5 | 109 | 0/10 |
| | 25 | 10.1±1.3 | 119 | 0/10 |
| | 50 | 13.1±2.3 | 156 | 0/10 |
| | 100 | 14.1±3.7 | 166 | 0/10 |
| | 200 | 9.6±0.7 | 113 | 0/10 |

Table 4

Antitumor activity of platinum complexes against L1210 murine leukemia in mice

| Compound | Dose (mg/kg) | Survival days (mean±SD) | T/C (%) | Survival rate |
|---|---|---|---|---|
| Control | - | 8.1±0.3 | 100 | 0/10 |
| Compound No. 5 | 1 | 9.0±0.6 | 111 | 0/6 |
| | 10 | 14.7±2.3 | 181 | 0/6 |
| | 25 | 19.8±6.1 | 244 | 1/6 |
| | 50 | 15.3±7.1 | 189 | 0/6 |
| | 100 | 4.2±1.0 | 52 | 0/6 |
| | 200 | 2.0±0.0 | 25 | 0/6 |
| CDDP | 2.5 | 13.2±2.9 | 163 | 0/6 |
| | 5.0 | 16.0±2.8 | 198 | 0/6 |
| | 7.5 | 14.2±2.4 | 175 | 0/6 |
| Control | - | 8.5±0.5 | - | 0/10 |
| CBDCA | 1 | 8.3±0.5 | 98 | 0/10 |
| | 10 | 9.3±0.5 | 109 | 0/10 |
| | 25 | 10.1±1.3 | 119 | 0/10 |
| | 50 | 13.1±2.3 | 156 | 0/10 |
| | 100 | 14.1±3.7 | 166 | 0/10 |
| | 200 | 9.6±0.7 | 113 | 0/10 |

Example 8

Acute toxicity test of the compounds of the invention on mice was conducted while using CDDP as control. Each test compound was intraperitoneally injected into Slc:ICR mice (male, 5 weeks old). Each compound was formulated into a solution or suspension in a 0.05% Tween 80 solution. The $LD_{50}$ value was calculated from mortality found on the 14th day after said injection.

The results are shown in Table 5.

Table 5. Acute toxicity of platinum complexes

| Compound | $LD_{50}$ (mg/Kg) |
|---|---|
| Compound No. 1 | 35 |
| Compound No. 3 | >200 |
| Compound No. 5 | 47 |
| CDDP | 15.3 |

As shown in Table 5, the compounds of this invention are lower in toxicity than CDDP.

CLAIMS

1. A novel platinum(II) complex represented by the general formula (I):

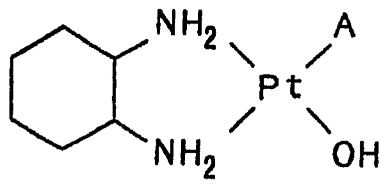

( I )

wherein A is an enol form of ß-diketone of the formula (II):

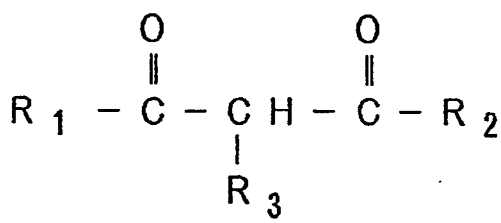

( II )

in which $R_1$ is an alkyl group having 1 to 4 carbon atoms or a perfluoroalkyl group having 1 to 4 carbon atoms; $R_2$ is a substituted or unsubstituted alkyl group having 1 to 4 carbon atoms; and $R_3$ is hydrogen or an alkyl group having 1 to 3 carbon atoms, or $R_2$ and $R_3$ together with carbon atoms to which they are attached may form a ring, and the configuration of 1,2-diaminocyclohexane is cis-, trans-*l*- or trans-*d*-.

2. A platinum(II) complex according to claim 1, which is represented by the formula:

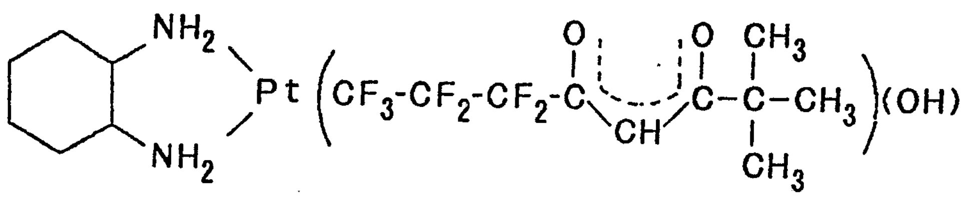

3. A platinum(II) complex according to claim 1, which is represented by the formula:

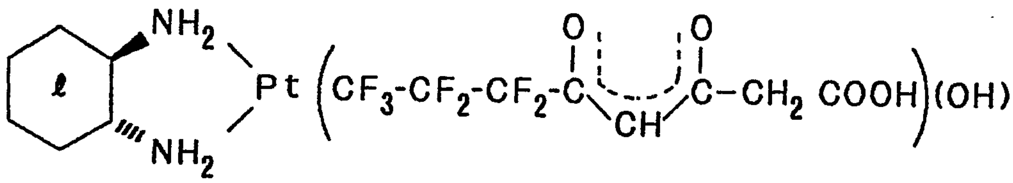

4. A platinum(II) complex according to claim 1, which is represented by the formula:

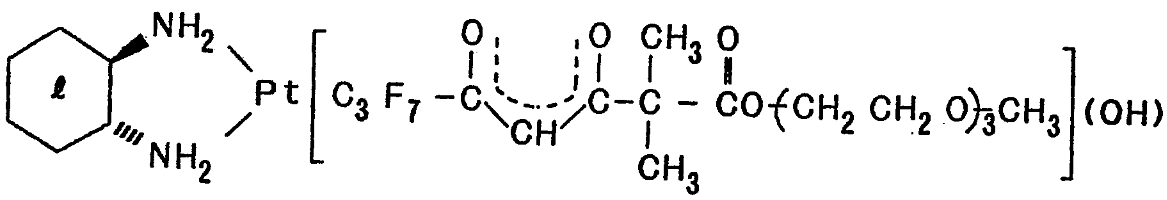

5. A platinum(II) complex according to claim 1, which is represented by the formula:

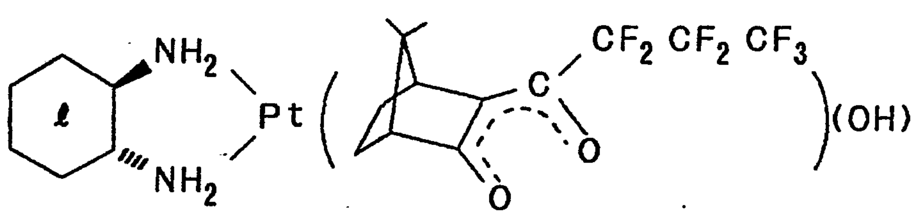

6. A pahrmaceutical agent for treating a malignant tumor, containing as an active ingredient a novel platinum(II) complex represented by the general formula (I):

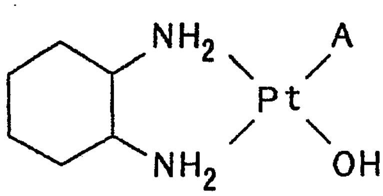

( I )

wherein A is an enol form of ß-diketone represented by the following general formula (II):

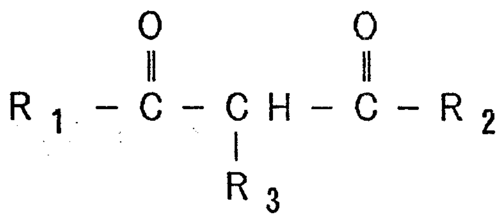

( II )

in which $R_1$ is an alkyl group having 1 to 4 carbon atoms or a perfluoroalkyl group having 1 to 4 carbon atoms; $R_2$ is a substituted or unsubstituted alkyl group having 1 to 4 carbon atoms; and $R_3$ is hydrogen or an alkyl group having 1 to 3 carbon atoms, or $R_2$ and $R_3$ together with carbon atoms to which they are attached may form a ring, and the configuration of 1,2-diaminocyclohexane is cis-, trans-ℓ- or trans-d-.

7. A pharmaceutical agent for treating a malignant tumor according to claim 6, which contains as an active ingredient a platinum(II) complex of the formula:

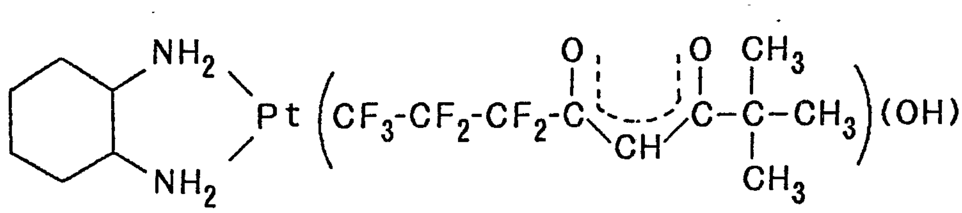

8. A pharmaceutical agent for treating a malignant tumor according to claim 6, which contains as an active ingredient a platinum(II) complex of the formula:

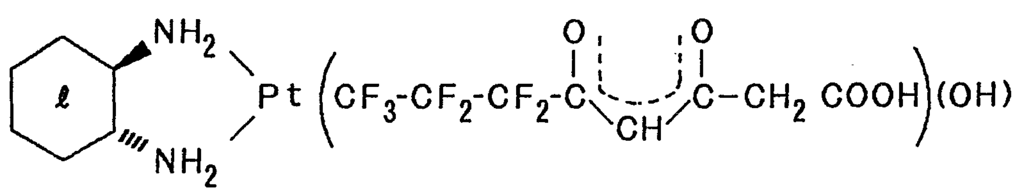

9. A pharmaceutical agent for treating a malignant tumor according to claim 6, which contains as an active ingredient a platinum(II) complex of the formula:

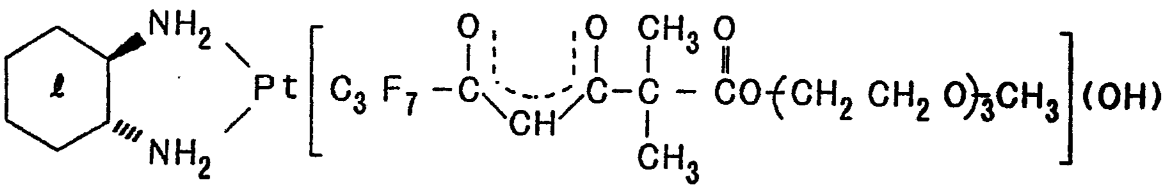

10. A pharmaceutical agent for treating a malignant tumor according to claim 6, which contains as an active ingredient a platinum(II) complex of the formula:

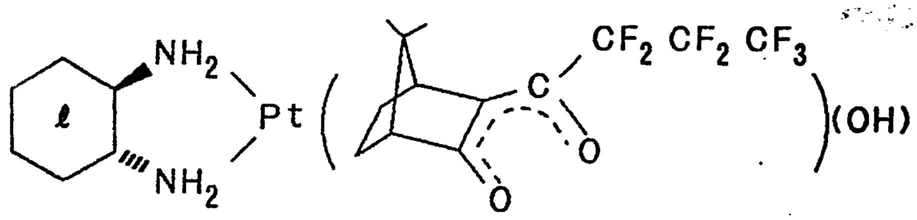

11. A process for preparing a novel platinum(II) complex represented by the general formula (I):

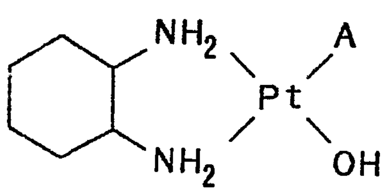

( I )

wherein A is as defined above, which comprizes passing a compound of the formula (III):

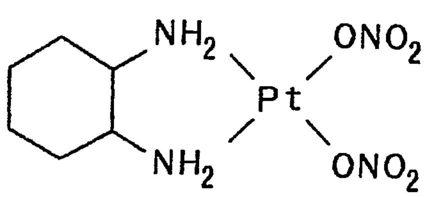

( III )

in which the configuration of 1,2-diaminocyclohexane is cis-, trans-*l*-, or trans-*d*-, through a column packed with an anion exchange resin (OH type) to form a compound of the formula (IV):

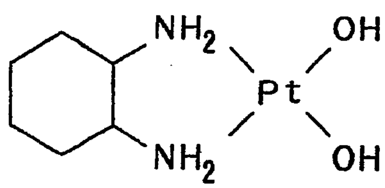

( IV )

and reacting the compound thus obtained with a compound of the formula (II):

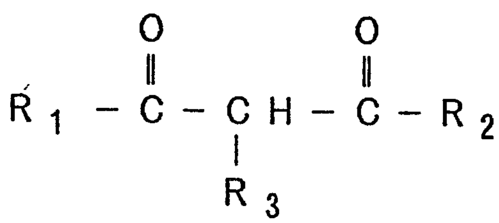

( II )

wherein $R_1$, $R_2$ and $R_3$ are as defined above.

Fig. I

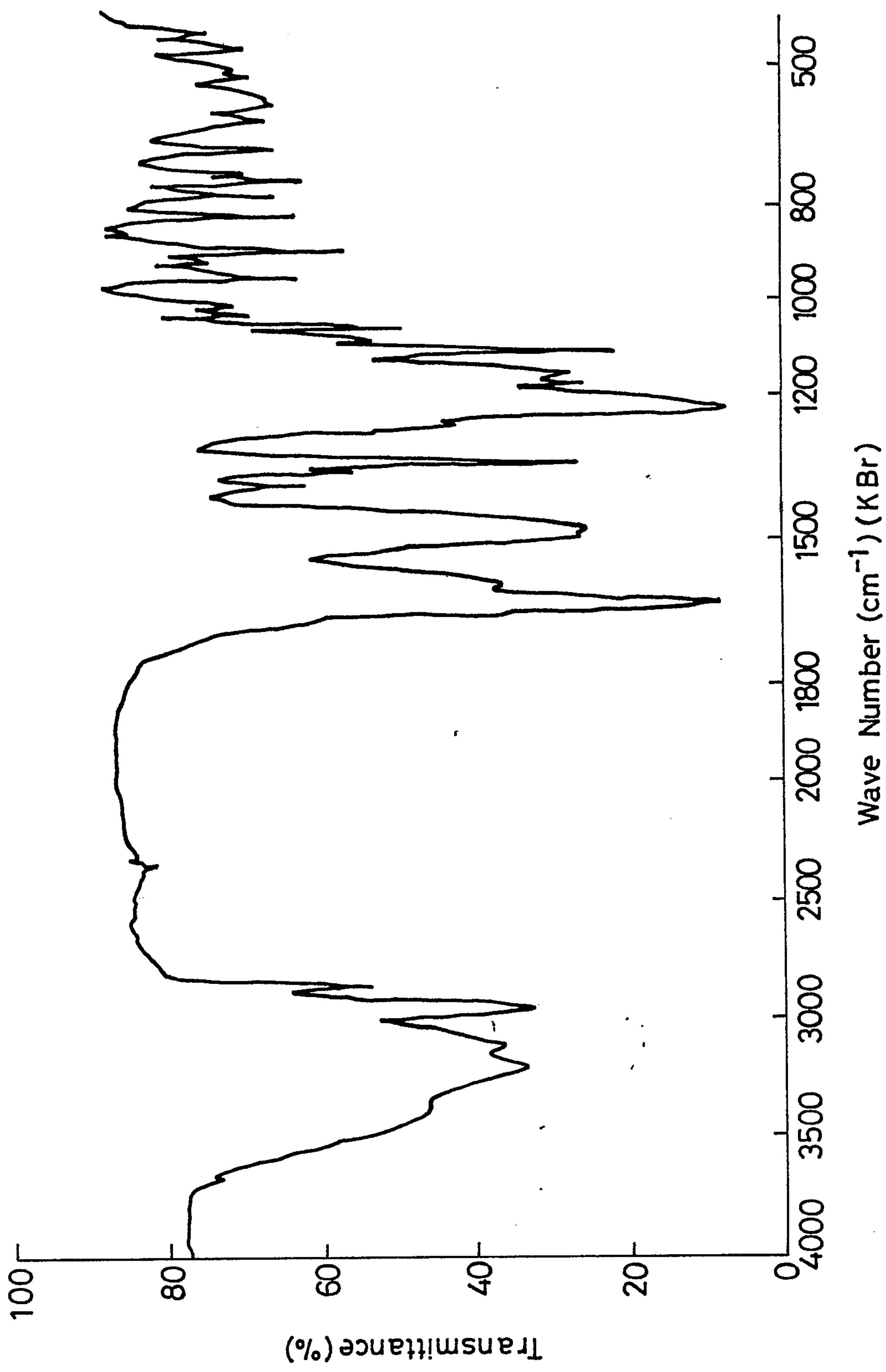

Transmittance (%)
100
80
60
40
20
0
4000
3500
3000
2500
2000
1800
1500
1200
1000
800
500
Wave Number (cm$^{-1}$) (KBr)

Fig. 2

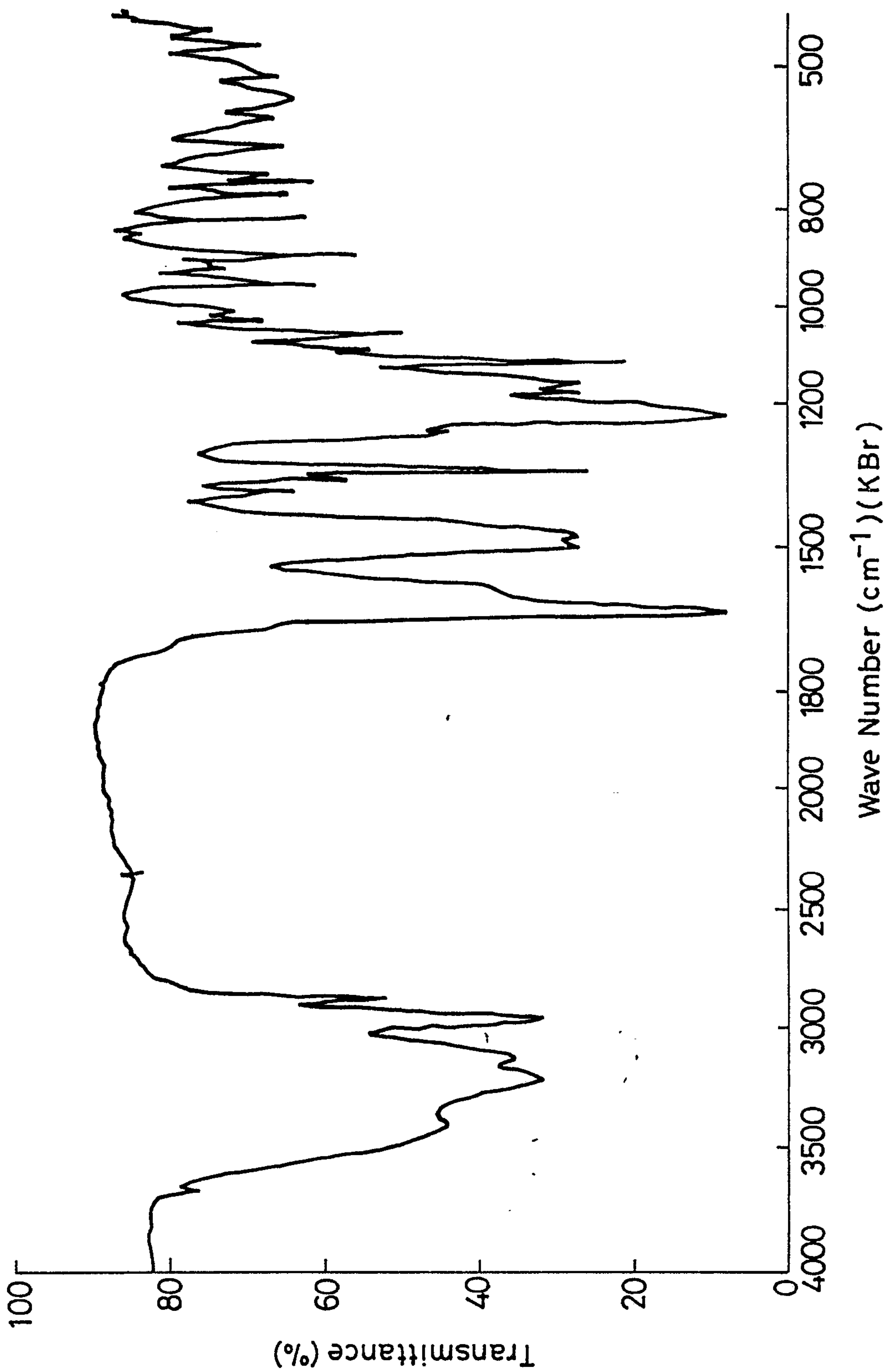

Transmittance (%)
100
80
60
40
20
0
4000
3500
3000
2500
2000
1800
1500
1200
1000
800
500
Wave Number (cm⁻¹)(KBr)

*Fig. 3*

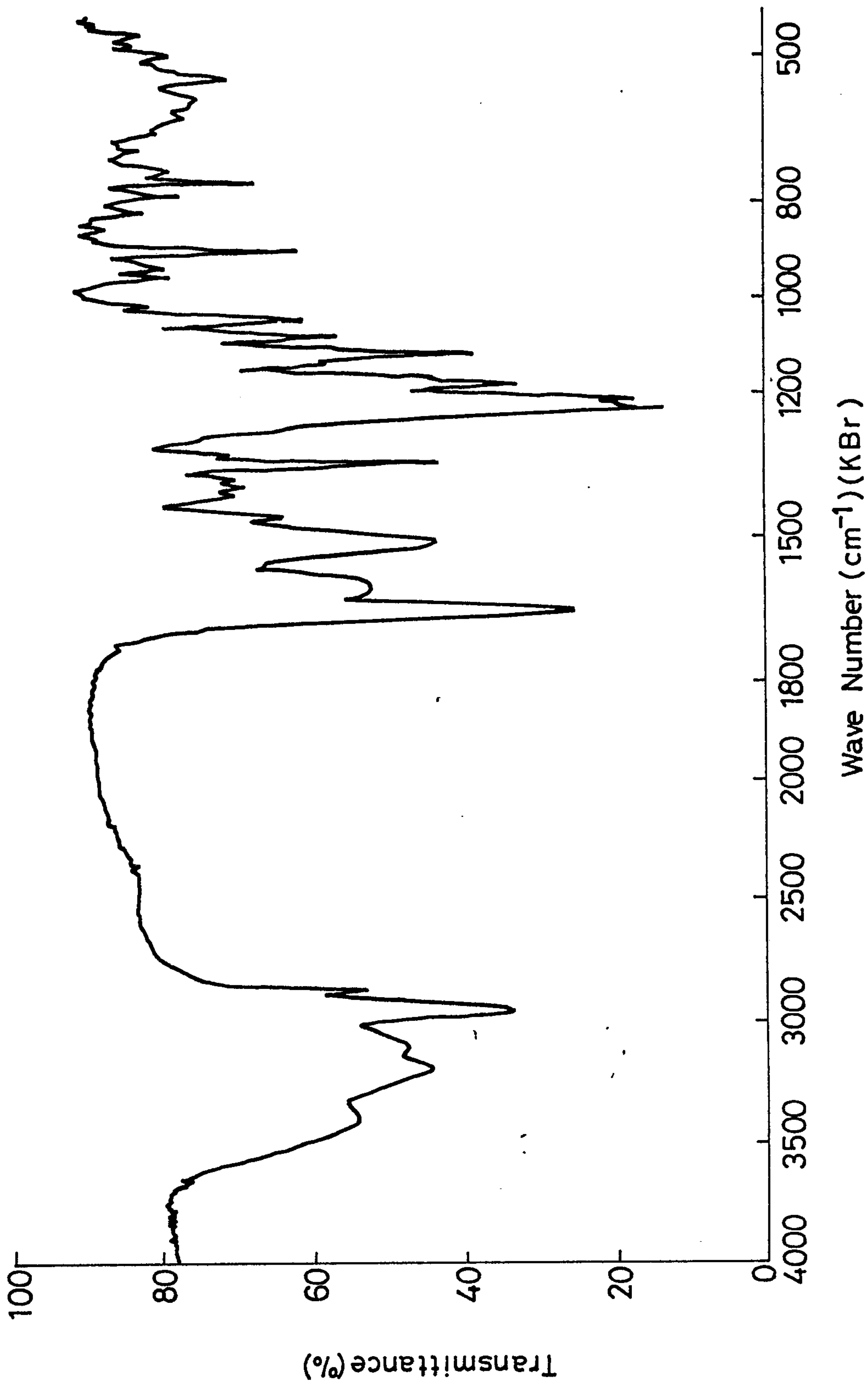
Transmittance (%)
100
80
60
40
20
0
4000
3500
3000
2500
2000
1800
1500
1200
1000
800
500
Wave Number ($cm^{-1}$) (KBr)

# INTERNATIONAL SEARCH REPORT

International Application No PCT/JP88/01139

## I. CLASSIFICATION OF SUBJECT MATTER (if several classification symbols apply, indicate all) [6]

According to International Patent Classification (IPC) or to both National Classification and IPC

Int.Cl[4] C07F15/00, C07C87/34, A61K31/28

## II. FIELDS SEARCHED

Minimum Documentation Searched [7]

| Classification System | Classification Symbols |
| --- | --- |
| IPC | C07F15/00, C07C87/34, A61K31/28 |

Documentation Searched other than Minimum Documentation to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
| --- | --- | --- |
| A | JP, A, 61-87692 (Engelhard Corporation) 6 May 1986 (06. 05. 86) & EP, A, 174114 & AU, A, 8546142 & ZA, A, 8506127 & DK, A, 8503678 & FI, A, 8503078 . | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
| --- | --- |
| January 23, 1989 (23. 01. 89) | February 6, 1989 (06. 02. 89) |
| **International Searching Authority** | **Signature of Authorized Officer** |
| Japanese Patent Office | |